# FASCICULE DE BREVET EUROPEEN

(11) **EP 1 183 859 B1**
(45) Date de publication et mention de la délivrance du brevet: **08.10.2003**
(21) Numéro de dépôt: 00922756.2
(22) Date de dépôt: 26.04.2000
(51) Int. Cl.: H04N 1/00

(54) **PROCEDE ET DISPOSITIF POUR LA CONSULTATION D'UNE INFORMATION A PARTIR D'UN SUPPORT DE LECTURE NOMADE**
VERFAHREN UND GERÄT ZUM ABRUFEN VON INFORMATION FÜR DAS FERNSTUDIUM
METHOD AND DEVICE FOR CONSULTING AN ITEM OF INFORMATION USING A MOBILE READ MEDIUM

(30) Priorité: 27.04.1999 FR 9905426
(43) Date de publication de la demande: 06.03.2002
(73) Titulaire: Schweitzer, Pierre, 67000 Strasbourg (FR)
(72) Inventeur: SCHWEITZER, Pierre, F-67000 Strasbourg (FR)
(74) Mandataire: Breese, Pierre
(86) Numéro de dépôt international: FR0001107
(87) Numéro de publication internationale: WO00065822

(56) Documents cités:
- EP-A- 0 145 206
- EP-A- 0 390 611
- WO-A-98/55913
- DE-A- 19 639 689
- US-A- 5 463 725
- US-A- 5 534 888
- US-A- 5 761 485

## Description

L'invention concerne un procédé ainsi qu'un dispositif pour la consultation, à partir d'un support de lecture nomade comportant des moyens d'affichage, d'une information issue d'une base de données informatique ou analogue.

La présente invention concerne le domaine de la fabrication des supports de lecture informatiques de type nomades aptes à contenir un certain nombre d'informations et à permettre la consultation de ces dernières, de manière autonome, et en un lieu quelconque, lesdits supports nomades constituant une version électronique des ouvrages de littérature ou analogue imprimés sur un support papier.

L'on connaÎt, d'ores et déjà, des dispositifs nomades permettant de télécharger une information à partir d'une base de données informatique, notamment disponible en ligne, par exemple via Internet. Cette information peut, alors, selon le cas, être téléchargée, soit directement par un micro-ordinateur du type portable, soit par une machine du type ordinateur de bureau ou analogue, avant d'être transférée à un micro-ordinateur portable, ce dernier définissant, alors, un support de lecture nomade de type informatique.

On connaît dans l'état de la technique le brevet WO9855913 décrivant un procédé pour gérer et consulter des documents préalablement collectés, chaque document pouvant être visualisé sous la forme d'un ensemble de pages d'un livre. Lors de la visualisation d'un document par un utilisateur, on affecte un repère spatial et chronologique à ce document en cours de visualisation, en réponse à une instruction de marquage émise par cet utilisateur. Ce repère contient une information représentative de ce document et se présente en pratique sous la forme d'un onglet affecté à l'une des pages de ce document. Utilisation notamment pour une aide à la consultation de données collectées sur le Web.

Les brevets US534888, US5761485, DE19639689, EP390611, US5463725 ou EP145206 concernent différentes réalisations de « livres électroniques » connus dans l'art antérieur

On remarquera qu'un tel support de lecture présente un certain nombre d'inconvénients qui ne lui permettent, en aucun cas, de rivaliser avec un ouvrage de type papier et, donc, de constituer une alternative à ce dernier. En effet, du point de vue pratique, un tel micro-ordinateur portable représente un poids et un encombrement disproportionnés par rapport à celui d'un livre-papier sans compter que les possibilités de consultation, par rapport à ce dernier, sont extrêmement limitées dans le temps de par la faible autonomie d'un tel micro-ordinateur portable. Du point de vue technologique, la conception de ce dernier répond à des critères qui vont notablement au-delà de ce qui est nécessaire pour une utilisation de ce support de lecture à la manière d'un livre. Enfin, du point de vue économique, son coût de revient est totalement incapable de concurrencer celui d'un ouvrage papier.

La présente invention apporte une solution aux problèmes précités au travers d'un procédé nouveau et d'un dispositif original, notamment apte à mettre en oeuvre ce dernier. Plus particulièrement, la présente invention se veut à même de proposer un support de lecture d'un type nouveau apte à constituer une alternative aux ouvrages consignés sur un support papier.

À cet effet, la présente invention concerne un procédé conforme à la revendication 1, et un dispositif conforme à la revendication 6.

Une caractéristique additionnelle de la présente invention. concerne le fait que l'on assure, de manière successive, l'affichage des pages de l'information pour leur lecture à la manière d'un livre et que l'on commande, successivement, à l'aide de moyens appropriés, le défilement de ces pages.

Une caractéristique additionnelle concerne le fait que ledit écran est transparent et reçoit, au moins au niveau de sa face arrière, des moyens, d'une part, aptes à occulter l'arrière plan dudit support de lecture et, d'autre part, autorisant le passage de la clarté ambiante pour un éclairage, par l'arrière, de l'écran transparent.

Un mode de réalisation préféré consiste à disposer de tels moyens d'occultation en face avant et en face arrière dudit écran transparent, ce dernier étant associé à des moyens aptes à réaliser un affichage, symétrique par rapport à un plan médian de l'écran, de l'information en vue d'autoriser, pour deux pages successives, une consultation, de manière intelligible, d'information contenue dans la première et dans la deuxième de ces pages à partir, respectivement, de l'avant et de l'arrière dudit écran transparent.

Selon un autre mode de réalisation, lesdits moyens d'affichage sont définis par au moins un écran transparent, à cristaux liquides du type cholestérique ou analogue et à 1farrière duquel est disposé un fond opaque, notamment noir.

Un mode de réalisation préféré concerne un écran. transparent, à cristaux. liquides de. type cholestérique ou autre et complété, d'une part, par des moyens aptes à réaliser un affichage, symétrique par rapport à un plan médian dudit écran, de l'information, et, d'autre part, par deux fonds opaques de nature escamotable, notamment en alternance, et disposés, respectivement, à l'arrière et à l'avant dudit écran, en vue d'autoriser, pour deux pages successives, une consultation, de manière intelligible, de l'information contenue dans la première et dans la deuxième de ces pages à partir, respectivement, de l'avant et de l'arrière dudit écran transparent.

Selon une autre caractéristique de la présente invention, les moyens de commande du défilement, page par page, en avant et/ou en arrière, de l'information consistent, dans le cas de moyens d'affichage au recto dudit support de lecture, soit en au moins un capteur d'inclinaison et/ou au moins un capteur de basculement de ce dernier, soit en au moins un organe de commande apte à être actionné manuellement, notamment un bouton-poussoir, une molette ou autre.

Dans le cas d'un support de lecture à affichage recto verso de l'information, lesdits moyens de commande en défilement, page par page, consistent en un capteur de retournement dudit support de lecture. Ce dernier peut encore être complété par des moyens de commande en défilement rapide des pages consistant, soit en au moins un capteur d'inclinaison et/ou en au moins un capteur de basculement, soit en au moins un organe de commande spécifique apte à être actionné manuellement.

La présente invention autorise, avantageusement, le transfert d'une information, issue d'une base de données informatique, à un support de lecture autonome et nomade de type informatique.

Une telle information est susceptible d'adopter une forme quelconque au niveau de cette base de données sachant que, avantageusement, cette information va subir, au niveau des moyens de transfert, une mise ou une remise sous la forme d'une succession de pages au contenu figé. Ces pages au contenu figé sont destinées, d'une part, à être transférées et, d'autre part, à être enregistrées et, d'autre part encore, à être affichées, sans subir de modification, au niveau dudit support de lecture.

Cette invention permet, avantageusement, de réduire les ressources informatiques au niveau dudit support de lecture. En effet, sachant que la mise ou la remise en pages de l'information est réalisée par des moyens délocalisés par rapport audit support de lecture, ce dernier peut, avantageusement, en être dépourvu.

Il suffit, en fait, que ce support de lecture nomade comporte, d'une part, des moyens aptes à permettre un enregistrement et, d'autre part, des moyens aptes à assurer un affichage des pages au contenu figé, sans subir aucune modification, et dans la forme dans laquelle elles lui ont été transférées par les moyens de transfert.

L'information accessible au travers de ce support de lecture est susceptible d'être réactualisée en purgeant la mémoire et en remplaçant son contenu par les nouvelles pages d'une autre information. Un même support de lecture est, ainsi, susceptible d'être réutilisé indéfiniment ce qui lui permet de contenir et d'autoriser la lecture d'un nombre illimité d'ouvrages.

A ce propos, on remarquera que, jusqu'à présent, tout type d'information était rapporté sur un support papier. Aussi, le fait de consulter une telle information pour, ensuite et de manière générale, abandonner son support ou encore, le simple fait de rendre ladite information disponible au public sans jamais être consultée effectivement, se traduit par une consommation importante de papier. L'emploi d'un support de lecture nomade de type informatique réutilisable permet de réaliser une économie de papier substantielle et, par là même, de préserver l'environnement.

Un autre avantage de la présente invention concerne le fait que ledit support de lecture nécessite, pour son fonctionnement, une faible quantité d'énergie ce qui lui confère une grande autonomie ainsi que des possibilités de consultations étendues.

Ce support de lecture nomade est, de plus, léger, pratique, peu encombrant et d'une utilisation particulièrement simple. A ce propos, on remarquera que le défilement des dites pages se fait au travers d'une gestuelle sensiblement similaire à celle connue pour la consultation d'un ouvrage imprimé sur un support papier.

D'autres buts et avantages de la présente invention. apparaîtront au cours de la description qui va suivre se rapportant à des 1 5 modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée du dispositif selon l'invention ;
- la figure 2 est une vue schématisée, en perspective et en coupe partielle,. correspondant à un premier mode de réalisation d'un support de lecture de type à affichage sur le recto ;
- la figure 3 est une vue schématisée et en coupe selon XX du support de lecture représenté figure 2
- les figures 4 et 5 sont des vues schématisées, en plan et en coupe partielle, correspondant à deux autres modes de réalisation d'un support de lecture de type à affichage sur le recto
- la figure 6 est une vue schématisée, en perspective et en coupe partielle, d'un support de lecture du type à affichage recto verso et comportant un écran transparent éclairé par l'arrière
- la figure 7 est une vue schématisée et en coupe selon YY du support de lecture représenté figure 6 ;
- la figure 8 est une vue schématisée et en perspective du support de lecture de la figure 6 après son retournement ;
- la figure 9 est une vue schématisée et en coupe d'un support de lecture à écran à cristaux liquides de type cholestérique ;
- la figure 10 est une vue similaire aux figures 6 et 8 et correspond à un mode de réalisation d'un support de lecture de type recto verso comportant des moyens de commande en défilement. rapide des pages.

Tel qu'il ressort des figures des dessins en annexe, la présente invention concerne un dispositif 1 ainsi qu'un procédé pour la consultation d'une information issue. d'une base de données informatique 2 ou analogue. Une telle information est affichée, en vue de sa consultation, au niveau d'un support de lecture 3 nomade du type informatique.

En fait, une telle base de données informatique 2 est, généralement, disponible au niveau d'une unité centrale 4 qui, selon un premier cas de figure, peut être définie par une machine du type micro-ordinateur ou analogue apte à être reliée, directement, audit support. de lecture 3.

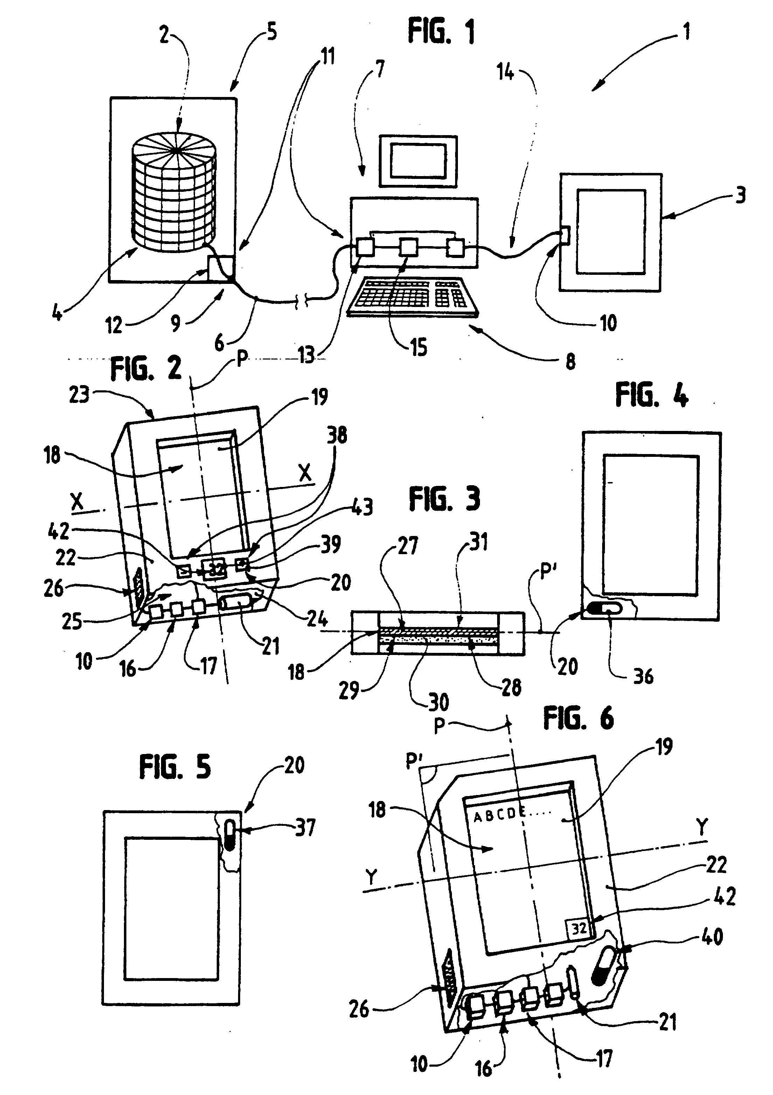

Cependant et tel que représenté figure 1, cette unité centrale 4 peut être définie par une première machine du type serveur télématique 5 ou analogue, reliée, notamment par l'intermédiaire d'un réseau de télécommunication 6, à une seconde machine 7, par exemple du type micro-ordinateur, apte à être connectée audit support de lecture 3.

Selon l'invention, le procédé consiste en ce que l'on transfère, à partir de ladite base de données 2, l'information audit support de lecture nomade 3 ;
- l'on enregistre, au niveau de. moyens de stockage que comporte ce support de lecture 3, ces informations sous forme d'une succession de pages au contenu figé, de type fac-similé ;
- l'on assure, au niveau de ce support de lecture 3, l'affichage page par page, à la manière d'une impression réalisée par une imprimante, de l'information enregistrée
- on commande le défilement, page par page, en avant et/ou en arrière, de cette information.

Il convient, au préalable, d'observer que l'information disponible au travers de la base de données 2 peut, d'une part, se présenter sous diverses formes comme, par exemple, un menu déroulant du type parchemin ou une succession de pages et, d'autre part, consister en un texte, du type calligraphié ou dactylographié, et/ou en des figures, schémas, illustrations ou autres.

Ainsi, par exemple dans le cas d'un ouvrage de littérature, l'information disponible se présente sous la forme d'une reproduction, de type fac-similé, d'une page comportant un texte, généralement de faible résolution, bordé par des marges souvent importantes.

Il en résulte, notamment pour des questions de lisibilité, que la présentation initiale de l'information disponible au niveau de la base de données 2 ne permet pas une consultation appropriée, à partir du support de lecture 3, de l'information après que cette dernière a simplement été reproduite à l'identique au niveau dudit support 3.

Aussi, le procédé selon l'invention consiste, au cours du transfert de l'information audit support de lecture 3, à modifier la présentation initiale de l'information, issue de la base de données 2, et à mettre ou à remettre celle-ci sous la forme d'une succession de pages au contenu figé. De telles pages constituent, en quelque sorte, un fac-similé de l'information issue de la base de données 2.

Afin de réaliser une telle mise ou remise en page, l'on procède, dans une première étape, à la suppression ou, tout du moins, à la réduction des marges afin de conserver, essentiellement, un ou plusieurs blocs correspondant à du texte.

L'on procède, dans une deuxième étape, au découpage de ce texte en une succession de mots ou groupes de mots qui, dans une troisième étape, sont disposés, les uns à la suite des autres et. en respectant la mise en page et la structure du texte initial (titres, retraits, débuts et fins de paragraphes ... au sein d'au moins une nouvelle page destinée, d'une part et dans une quatrième étape, à être transférée au support de lecture 3 et, d'autre part, à permettre, à partir de ce dernier, une consultation appropriée.

En ce qui concerne, plus particulièrement, ladite deuxième étape, celle-ci consiste en ce que l'on repère les lignes du texte initial en effectuant un histogramme horizontal au travers d'un balayage des lignes du bloc correspondant au texte.

Après repérage des lignes du texte, on procède au repérage des mots et groupes de mots dans chacune de ces lignes en effectuant, pour chacun d'elle, un histogramme vertical. On remarquera que si l'information comporte des dessins, schémas ou analogue, ceux-ci sont, avantageusement, assimilés à un groupe de mot.

Lesdits mots et groupes de mots sont, ensuite, isolés au sein d'un rectangle graphique auquel on associe, d'une part, des coordonnées cartésiennes relatives à son emplacement dans le bloc correspondant au texte initial et, d'autre part, un numéro correspondant à l'ordre d'apparition du mot ou du groupe de mots dans ce texte. Le texte initial se présente alors comme une chaîne de blocs graphiques numérotés et ordonnés.

A partir des coordonnées cartésiennes, l'on reconstitue la structure du texte initial (paragraphes, retraits, justification, espacement, titres, graphiques ... que l'on associe à des paramètres eux-mêmes associés aux blocs graphiques numérotés et ordonnés.

La troisième étape consiste, en fait, à assurer, le cas échéant, la réduction ou l'agrandissement des blocs graphiques afin d'autoriser, ultérieurement, une consultation appropriée de l'information à partir du support de lecture 3. Après une réduction ou un agrandissement éventuel de ces blocs graphiques, il est procédé à une nouvelle mise en page de ces derniers, d'une part, en respectant la structure du texte initial et, d'autre part, en tenant compte des paramètres des pages destinées à être transférées audit support de lecture 3.

Ces blocs graphiques sont, ainsi, insérés dans une succession de pages dont le contenu est, ensuite, figé ce qui confère à ces nouvelles pages une forme similaire à celle d'un fac-similé. Ces nouvelles pages sont, au cours d'une quatrième étape, transférées au support de lecture 3.

On observera que les étapes d'un tel procédé de mise ou de remise en. forme du texte initial peuvent être accomplies à l'aide d'un logiciel approprié installé, selon le cas, directement au niveau du serveur télématique 5 ou, encore et, selon un mode de réalisation préféré représenté figure 1, au niveau de la seconde machine 7 reliée audit support de lecture 3.

Le procédé selon l'invention consiste encore à transférer ladite information, sous forme de pages au contenu figé, audit support de lecture 3. En fait, ces pages sont transmises, sans modification, audit support de lecture 3 à la manière d'un pilote d'imprimante qui transmet à son imprimante les pages que cette dernière doit imprimer.

Tel qu'évoqué ci-dessus, le procédé selon l'invention consiste, après le transfert de l'information audit support de lecture 3, à assurer l'affichage, au niveau de ce dernier, des nouvelles pages mises ou remises sous forme d'une succession de pages au contenu figé, de type fac-similé. L'information affichée. au niveau dudit support de lecture nomade 3 constitue, en fait, une sorte de fac-similé de l'information issue de ladite base de donnée 2.

Aussi et selon l'invention, l'on assure, de manière successive, l'affichage des pages de l'information, page par page, à la manière d'une impression réalisée par une. imprimante, afin d'autoriser la lecture de ces pages à la manière d'un livre et l'on commande, successivement, à l'aide de moyens appropriés, le défilement de ces pages.

Selon un premier mode de réalisation de l'invention représenté figures 2, 4 et 5, l'on assure l'affichage de ladite information uniquement au recto dudit support de lecture 3. Dans un pareil cas, on commande le défilement des pages, soit par une commande en inclinaison et/ou en basculement dudit support 3, soit par actionnement manuel d'un organe de commande du défilement.

Selon un mode préféré de réalisation de l'invention, on assure l'affichage de deux pages successives de l'information au recto dudit support de lecture 3 pour la première de ces pages et au verso de ce support 3 pour la seconde page.

Dans un pareil cas, on commande le passage de la première à la seconde page en assurant le retournement dudit support de lecture 3 à la manière d'un changement de page d'un livre.

Il est également possible d'assurer un défilement rapide des pages affichées recto verso, soit par une commande spécifique en inclinaison et/ou en basculement dudit support de lecture 3, soit au travers d'un actionnement manuel d'un organe approprié de commande du défilement.

Afin de mettre en oeuvre le procédé selon l'invention, cette dernière concerne également un dispositif 1 pour la consultation d'une information issue d'une base de données informatique 2 ou analogue, une telle consultation s'effectuant au niveau d'un support de lecture 3 nomade du type informatique comportant des moyens d'affichage appropriés.

Un tel dispositif comporte des moyens de transfert 8 de ladite information, en provenance d'une unité centrale 4 recevant la base de données 2, et en direction du support de lecture 3.

De tels moyens de transfert 8 comportent, de manière connue en soi, des moyens d'émission 9 ainsi que des moyens de réception de l'information disposés, respectivement, au niveau de ladite unité centrale 4 et du support de lecture 3.

Lorsque l'on souhaite chercher et. importer une information située à distance, notamment à partir d'un serveur télématique 5 ou analogue tel que représenté figure 1, ces moyens de transfert 8 comportent, en outre, des moyens d'acquisition 11 de l'information consistant, notamment, en deux modems 12, 13 ou autres implantés, respectivement, au niveau de l'unité centrale 4 et de la seconde machine 7, lesdits modems 12, 13 étant reliés entre eux au travers d'un réseau de télécommunication 6 ou analogue. À ce propos, on observera que le modem 12 disposé au niveau de ladite unité centrale 4 définit, dans ce cas, des moyens d'émission 9 de l'information.

Dans un pareil cas, le dispositif 1 est encore complété par des moyens de transmission 14 de l'information entre la seconde machine 7 et le support de lecture 3, ces moyens 14 étant définis, au niveau de ce dernier, par lesdits moyens de réception 10.

Tel qu'il a été évoqué ci-dessus, l'information disponible au travers de la base de données 2 ne permet pas, en général et essentiellement pour des questions de lisibilité, une consultation appropriée à partir du support de lecture 3 sans avoir, au préalable, subi une modification de sa présentation initiale.

De ce fait, les moyens de transfert 8 de l'information comportent des moyens 15 aptes à mettre ou à remettre ladite information sous la forme d'une succession de pages au contenu figé, de type fac-similé. Ce sont ces nouvelles pages qui sont alors transmises audit support de lecture 3 par l'intermédiaire des moyens de transmission 14 définis, au niveau de ce dernier, notamment par lesdits moyens de réception 10.

En fait, ledit support de lecture 3 comporte, encore, des moyens de stockage 16 de l'information, repaginée au travers desdits moyens 15, et adoptant la forme d'une succession de pages au contenu figé, du type fac-similé.

De tels moyens de stockage 16 se présentent, en fait, sous la forme d'au moins une mémoire réinscriptible apte à contenir une ou plusieurs informations. Ces dernières sont susceptibles d'être réactualisées, retirées, effacées et remplacées par l'utilisateur pour, par exemple remplacer un ouvrage lu par un autre que l'on souhaite consulter. Ces moyens de stockage 16 peuvent, par exemple, être de type amovible et se présenter sous la forme d'une cartouche, d'un disque ou autres susceptibles d'être retirés et remplacés.

Lesdits moyens de stockage 16 sont complétés par des moyens de gestion de l'affichage 17 de l'information aptes à assurer un affichage, de cette dernière, page par page, à la manière d'une impression réalisée par une imprimante.

Ces moyens de gestion 17 sont conçus aptes à transmettre les pages de ladite information à des moyens d'affichage 18, d'une part, destinés à visualiser cette dernière dans des conditions de consultation appropriées et, d'autre part, définis par au moins un écran de visualisation 19, de préférence de forme rectangulaire.

Tel qu'évoqué ci-dessus, l'information se présente sous la. forme d'une succession de pages. dont il est nécessaire d'assurer le défilement en vue de permettre une consultation de l'intégralité de l'information à partir dudit support de lecture 3. A cet effet, ce dernier comporte des moyens de commande 20 du défilement, page par page, en avant et/ou en arrière, de ladite information.

De tels moyens de commande 20, décrits plus en détail ultérieurement, sont raccordés aux moyens de gestion 17 de l'affichage et peuvent nécessiter, tout comme ces derniers ainsi5 que les moyens de stockage 16 et les moyens d'affichage 18, un apport en énergie assuré au travers de moyens autonomes d'alimentation en énergie électrique 21 que comporte ledit support de lecture 3.

En fait et tel que visible, plus particulièrement, sur les figures 2 à 10, ce support de lecture 3 comporte un châssis 22 adoptant, de préférence, la forme d'un cadre rectangulaire 23 disposé dans un plan longitudinal Pl et à l'intérieur duquel sont enchâssés les moyens d'affichage 18 définis par le ou les écrans 19 de visualisation.

Ce châssis 22 est, au moins partiellement, délimité par un corps 24, notamment creux et définissant un volume interne 25, ce corps 24 étant destiné à recevoir lesdits moyens d'alimentation21, de stockage 16, d'affichage 18, de gestion 17 de cet affichage, de commande 20 du défilement et de réception 10. Ces derniers sont reliés à des moyens de connexion 26 que comportent lesdits moyens de transfert 8 et/ou de transmission 14, ces moyens 26 étant disposés en périphérie dudit châssis 22.

En ce qui concerne les moyens d'affichage 18, ces derniers sont définis, selon un premier type de réalisation, par au moins un écran 19 à cristaux liquides du type monochrome 27 et éclairé par l'arrière.

De manière connue en soi mais non représentée, un tel écran 27 est complété, à l'arrière, soit par réflecteur réfléchissant la lumière ambiante en vue de renforcer le contraste de l'affichage, soit par une lumière arrière artificielle du type écran lumineux. On remarquera que l'éclairage, par l'arrière, peut encore être assuré en bénéficiant d'une lumière ambiante constituée, par exemple, par la lumière du jour ou celle émise par un dispositif d'éclairage d'une habitation ou autre.

Un autre mode de réalisation, représenté figures 2 à 5, consiste en un écran 27, de type monochrome éclairé par l'arrière, de nature transparente et complété, au moins au niveau de sa face arrière 28 (figure 3), par des moyens 29, d'une part, aptes à occulter l'arrière plan dudit support de lecture 3 et, d'autre part, autorisant le passage de la clarté ambiante pour un éclairage, par l'arrière, dudit écran 27. Ces moyens 29 d'occultation et d'éclairage par l'arrière sont, avantageusement, définis par une plaque de verre dépoli 30 ou analogue.

Cependant et selon un mode de réalisation préféré visible figures 6 à 8, de tels moyens 29 sont disposés en face arrière ainsi qu'en face avant 31 dudit écran de type monochrome rétro-éclairé 27. Ce dernier est, dans ce cas, associé à des moyens aptes à réaliser un affichage de l'information de manière symétrique par rapport à un plan médian P de l'écran 27. De tels moyens sont destinés à autoriser, pour deux pages successives32, 33 de l'information une consultation, de manière intelligible, de ladite information contenue dans la première 32 et dans la deuxième 33 de ces pages à partir, respectivement, de l'avant et de l'arrière dudit écran transparent 27.

Un tel mode de réalisation autorise, ainsi, un affichage de l'information au niveau du recto et du verso dudit support de lecture 3. Un tel résultat peut, également, être atteint en disposant, dos-à-dos, deux écrans complétés, au niveau de leur face arrière 28, soit par un réflecteur, soit par une lumière arrière.

Selon un second type de réalisation, les moyens d'affichage 18sont définis par au moins un écran 19 transparent à cristaux liquides du type cholestérique 34 ou analogue à l'arrière duquel est disposé un fond opaque 35, notamment noir. On remarquera que des cristaux liquides de ce type autorisent un affichage de l'information en clair ce qui explique l'utilisation d'un fond de nature sombre.

Un écran 34 de ce type présente l'avantage d'une consommation énergétique très faible ce qui le rend particulièrement bien adapté à un support de lecture nomade 3.

Ce dernier reçoit un seul de ces écrans 34 dans le cas d'un affichage au niveau du recto uniquement de ce support de lecture3.

Lorsqu'il s'agit d'assurer un affichage recto verso d'une information au niveau dudit support de lecture 3, une première solution consiste à définir des moyens d'affichage 18 sous forme de deux écrans transparents et à cristaux liquides du type cholestérique 34 ou analogue disposés dos-à-dos et recevant, chacun ou l'un d'entre eux seulement, au niveau de leur face arrière 28, un fond opaque 35.

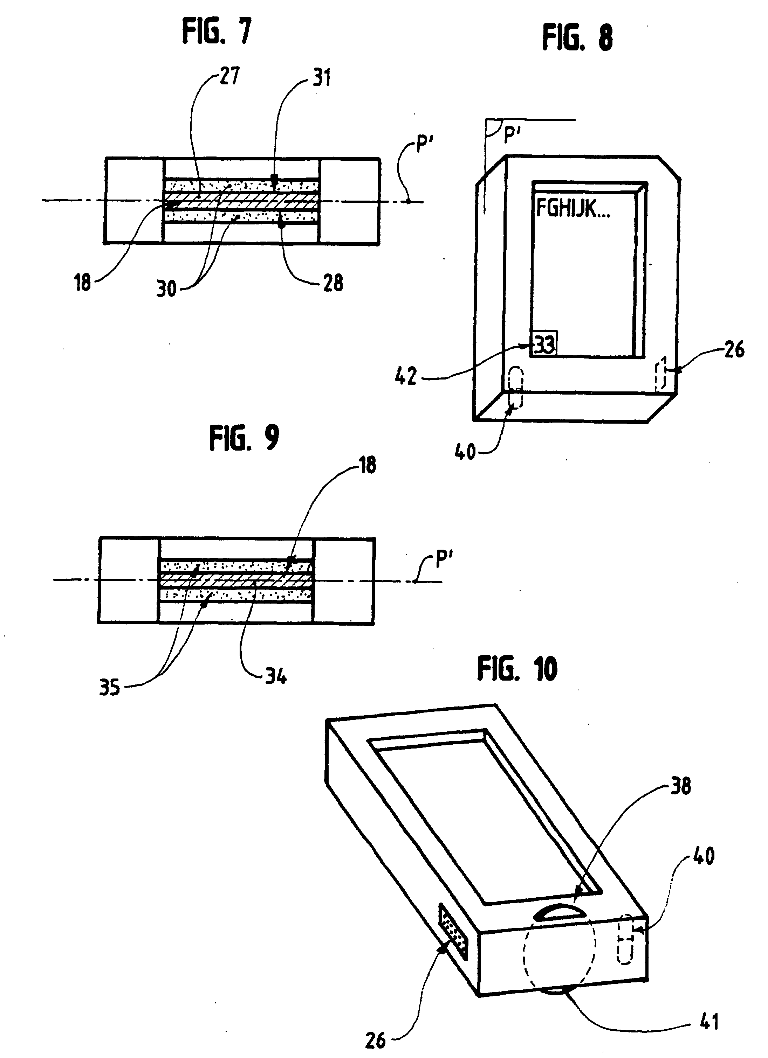

Cependant et selon un mode de réalisation préféré visible figure 9, une seconde solution consiste à compléter un tel écran 34, d'une part, par des moyens aptes à réaliser un affichage, symétrique par rapport à un plan médian P dudit écran 34 et d'autre part, par deux fonds opaques 35. Ces derniers sont de nature escamotable, notamment en alternance, et sont disposés, respectivement, à l'arrière et à l'avant dudit écran 34 en vue d'autoriser, pour deux pages successives 32, 33, une consultation, de manière intelligible, de l'information contenue dans la première 32 et dans la deuxième 33 de ces pages à partir, respectivement, de l'avant et de l'arrière dudit écran34 transparent.

On observera, à ce propos, que de tels fonds opaques 35 peuvent être constitués par une surface rabattable, un tissu enveloppant, un liquide sombre dans un flacon toroïdal enveloppant l'écran 34 ou par tout autre moyen permet de définir un tel fond 35.

En ce qui concerne, maintenant, les moyens de commande 20 du défilement page par page de l'information, il est nécessaire d'opérer une distinction selon que l'information est affichée au recto et au verso ou uniquement au recto du support de lecture3.

Ainsi, dans le cas d'un affichage au recto uniquement, de tels moyens de commande 20 du défilement peuvent se présenter sous la forme d'au moins un capteur de. basculement 36 et/ou d'au moins un capteur d'inclinaison 37 tel que cela a été représenté, respectivement, figures 4 et 5.

On remarquera qu'un capteur de basculement 36 (figure 4) est susceptible de détecter un pivotement, autour d'un axe, sensiblement contenu dans le plan longitudinal Pl du support de lecture 3, et parallèle au plan médian P de ce dernier. Un capteur d'inclinaison 37 (figure 5) détecte un pivotement dudit support de lecture 3 par rapport à un axe, sensiblement contenu dans le plan longitudinal Pl f et perpendiculaire audit plan médian P.

De tels capteurs 36 et 37 sont, en fait, reliés aux moyens de gestion 17 de 1faffichage et/ou aux moyens de stockage 16 auxquels ils transmettent un signal lorsqu'ils détectent un basculement et/ou une inclinaison dudit support de lecture 3, lesdits moyens 16 et/ou 17 répondant à ce signal en assurant le défilement, en avant ou en arrière, des pages de l'information.

Ainsi, un mode de réalisation peut consister à équiper ledit support de lecture 3 de deux capteurs de basculement 36 destinés à détecter un pivotement, respectivement, à gauche et à droite en vue. d'assurer le défilement, respectivement, en arrière et en avant des pages de l'information.

Le défilement, respectivement en avant. et en arrière des pages, peut encore être commandé par deux capteurs d'inclinaison 37 aptes à détecter l'inclinaison, respectivement vers l'avant et vers l'arrière (ou inversement) du support de lecture 3.

Lesdits capteurs de basculement 36 peuvent, encore, fonctionner en combinaison avec un ou plusieurs capteurs d'inclinaison 37, ces derniers pouvant, par exemple, servir à valider un basculement intentionnel et. à invalider un basculement involontaire.

Évidemment, une conception inverse consistant à commander le défilement par des capteurs d'inclinaison 37 et à valider la commande par des capteurs de basculement 36 est, également, envisageable.

Il est évident que, pour éviter un défilement intempestif, ces capteurs 36 et 37 peuvent être conçus aptes à détecter un tel basculement et/ou une telle inclinaison dudit support de lecture uniquement au-delà d'un certain angle de basculement ou d'inclinaison.

Selon un autre mode de réalisation, lesdits moyens de commande 20 en défilement peuvent. se présenter sous la forme d'un ou plusieurs organes de commande 38 aptes à être actionnés manuellement.

De tels organes 38 adoptent, par exemple et comme visible sur la figure 2, la forme de deux boutons poussoir 39 ou autres aptes à commander le défilement, respectivement, en avant et en arrière, des dites pages de l'information.

Lesdits organes 38 peuvent, encore, se présenter sous la forme d'une molette, d'une manette ou analogue dont l'actionnement, vers la gauche et vers la droite, permet de commander le défilement, respectivement, dans un sens croissant et décroissant des pages de manière similaire à un changement de page d'un livre-papier par balayage de ladite page à l'aide d'un doigt.

Dans le cas d'un support de lecture 3 à affichage sur le recto et sur le verso, la consultation de l'information se fait, pour deux pages successives 32, 33, au niveau du recto pour la. première 32 et au niveau du verso pour la seconde 33 de ces pages de sorte que la lecture de l'information nécessite un retournement de ce support de lecture 3 lors de chaque changement de page.

Pour ce faire, ledit support de lecture 3 comporte des moyens de commande 20 en défilement des pages constituées par un ou plusieurs capteurs de retournement 40 adoptant, par exemple, une forme similaire à un capteur à mercure et disposés, notamment, de manière perpendiculaire, soit au plan Pl du support de lecture 3, soit au plan de lecture.

On observera, également, que ces capteurs de retournement 40 constituent des moyens aptes, d'une part, à détecter le positionnement recto ou verso du support de lecture 3 et, d'autre part, en fonction de ce positionnement, à commander l'affichage, de manière intelligible et, selon le cas, de gauche à droite ou de droite à gauche, des pages de l'information. Untel affichage est réalisé de telle sorte que ladite information puisse être consultée, de manière appropriée et à l'endroit sur le support de lecture 3, quelle que soit la position recto ou verso de ce dernier.

Selon un mode de réalisation avantageux, ces capteurs de retournement 40 peuvent encore être complétés par des moyens d'inversion aptes à commander l'affichage de l'information, de manière intelligible, à l'envers sur ledit support de lecture 3.

Ceci autorise la consultation de l'information par le dessous,. par exemple pour un lecteur allongé sur le dos et tenant le support de lecture 3 au-dessus de lui.

Un tel support de. lecture 3 peut, encore, comporter des moyens de commande en défilement rapide des pages consistant, par exemple, soit en au moins un capteur de basculement 36 et/ou en au. moins un capteur d'inclinaison 37 similaires à ceux décrits ci-dessus, soit en un ou plusieurs organes de commande 38 aptes à être actionnés manuellement et, là encore, du type évoqué plus haut.

Ainsi et comme visible figure 10, un tel organe de commande 38 peut adopter la forme d'une molette 41 ou analogue disposée au niveau du châssis 22, perpendiculairement au plan Pl de ce dernier, ladite molette 41 émergeant, au moins en partie, au niveau du recto et/ou du verso dudit support de lecture 3, hors dudit châssis 22.

Selon une autre caractéristique de l'invention, ledit support 3 peut être équipé de moyens d'affichage 42 du numéro de la page consultée, de tels moyens 42 consistant, par exemple, en au moins un afficheur 43 disposé au niveau du châssis 22 ou encore en une incrustation du numéro de la page, simultanément au contenu de cette dernière, au niveau du ou des écrans 19 de visualisation 27, 34.

Ledit support de lecture 3 peut encore être complété par des moyens aptes à détecter son basculement et/ou son inclinaison au-delà d'un angle donné par rapport à son plan de référence.

Ces moyens de détection, lorsqu'ils détectent un tel basculement et/ou une telle inclinaison, sont à même, d'une part, de commander des moyens d'affichage du numéro de la page en même temps que l'information correspondant à cette dernière.

L'affichage de ce numéro est réalisé, selon le cas, à gauche ou à droite du plan longitudinal Pl du support de lecture 3.

Ces moyens de détection sont, d'autre part, à même de. commander l'affichage successif des pages de ladite information et ceci dans un ordre décroissant ou croissant, en fonction de l'emplacement à gauche ou à droite, du numéro affiché.

Un tel mode de réalisation permet d'informer le lecteur que, en fonction de la position du numéro affiché, une commande en basculement ou en inclinaison du support entraîne l'affichage dans un ordre croissant ou décroissant des pages de l'information. Ceci permet, également, de singer le défilement rapide des pages d'un livre-papier classique sachant que si ledit numéro est affiché à gauche, respectivement à droite, une commande en basculement ou en inclinaison du support de lecture3 vers la gauche, respectivement vers la droite, va entraîner un défilement en arrière, respectivement en avant, des pages de l'information.

Une autre caractéristique de l'invention concerne le fait que ce support de lecture 3 comporte des moyens de mise en veille automatique des moyens d'affichage 18, notamment après une période prolongée d'immobilité.

Selon une autre caractéristique, ce support de lecture nomade 3comporte des moyens aptes, après son extinction et/ou sa mise en veille, à sauvegarder dans une mémoire non volatile le numéro de la dernière page lue pour, lors d'une nouvelle consultation, afficher, automatiquement, la page correspondante au numéro enregistré dans ladite mémoire non volatile.

Selon une autre caractéristique de la présente invention, lesdits moyens de transfert 8 comportent des moyens aptes à créer des liens hypertexte entre, d'une part, l'une au moins des pages au contenu figé correspondant à l'information, dite primaire, et issue de la base de données 2 et, d'autre part, une information secondaire, lesdits liens hypertexte étant susceptibles d'être activés au niveau dudit. support de lecture nomade 3, ceci par l'intermédiaire de moyens d'activation que comporte ce dernier.

En ce qui concerne ladite information secondaire, celle-ci peut, à titre d'exemple indicatif, être constituée par un dictionnaire ou une encyclopédie, notamment sous forme d'extraits sélectionnés à la base des termes apparaissant dans les pages de l'information primaire. Cette information secondaire peut encore être constituée par un autre ouvrage, notamment de littérature, voire une autre page de l'information primaire. Ladite Information secondaire peut encore consister en une page, un extrait d'une page, notamment une page web ou autre.

On observera que cette information secondaire peut-être disponible au niveau de ladite seconde machine 7, d'une mémoire associée à cette dernière (CD ROM, disquette..) ou encore au niveau d'un serveur télématique, informatique ou autre, par exemple celui recevant ladite base de données 2, et, notamment, accessible au travers. dudit réseau de télécommunication 6.

En fait, lesdits moyens aptes à créer des liens hypertexte entre une information primaire et une information secondaire, peuvent encore être conçus aptes à créer de tels liens entre ladite information secondaire et une information tertiaire et ainsi de suite. Il en résulte que ces liens hypertextes sont susceptibles de définir une arborescence à plusieurs niveaux. Aussi, lesdits moyens aptes à créer de tels liens hypertexte sont complétés par des moyens de sélection du niveau de cette arborescence, ces moyens de sélection étant, par exemple, commandés par le lecteur.

Lesdits moyens de création de liens hypertexte sont, encore, complétés par des moyens destinés à permettre la sélection de la nature des informations secondaire, tertiaires ou autres vers lesquelles il est possible de définir une liaison. Ceci permet, par exemple, d'éliminer des informations indésirables ou préjudiciables au lecteur, notamment lorsqu'il s'agit d'enfants.

Il convient, de plus, d'observer que les moyens aptes à créer des liens hypertexte sont également conçus aptes à commander, d'une part, des moyens 15 pour la mise de ladite information secondaire, tertiaire ou analogue sous forme d'au moins une page au contenu figé et, d'autre part, le transfert de cette ou ces dernières audit support de lecture 3 de manière complémentaire, voire concomitante, au transfert des pages au contenu figé correspondant à 1finformation primaire.

Lesdits moyens de sélection de la nature des informations et du niveau de l'arborescence permettent, par conséquent et avantageusement, de restreindre le nombre de pages transmises audit support de lecture nomade.

Une autre caractéristique consiste en ce que ledit support de lecture 3 comporte des moyens d'activation de ces liens hypertexte, de tels moyens d'activation pouvant être constitués par au moins une zone définie au niveau d'au moins un écran tactile, selon le cas, que comportent les moyens d'affichage 18ou associé à ces derniers.

Selon un autre mode de réalisation, de tels moyens d'activation peuvent être définis en périphérie des moyens d'affichage 18 et adopter la forme d'au moins une bordure sensitive, d'au moins un capteur de pression ou autre.

## Revendications

1. Procédé mis en oeuvre par des moyens logiciels automatisés pour la consultation, à partir d'un support de lecture nomade (3) comportant des moyens d'affichage (18), d'une information, correspondant à un texte au contenu figé issue d'une base de données informatique (2) ou analogue, comportant une première étape, de suppression ou, tout du moins, de réduction des marges en vue de conserver, essentiellement, un ou plusieurs blocs correspondant à du texte et une seconde étape de découpage de ce texte en une succession de mots ou groupes de mots **caractérisé par le fait qu'**il comporte :
- une troisième étape consistant à disposer ces mots ou groupes de mots, les uns à la suite des autres, en respectant la mise en page et. la structure du texte initial, au sein d'au moins une nouvelle page ;
- une quatrième étape de transfert cette ou ces nouvelles pages au support de lecture (3).

2. Procédé selon la revendication 1, **caractérisé par le fait que** la mise ou la remise- en page de l'information consiste :
• l'on transfère ladite information audit support de lecture nomade (3) et que, lors de ce transfert, l'on assure la mise ou la remise de cette information sous la forme d'une succession de pages au contenu figé, de type fac-similé ;
• l'on enregistre, au niveau de moyens de stockage (16) que comporte ledit support de lecture nomade (3), cette information sous forme d'une succession de pages au contenu figé, de type fac-similé on assure, au niveau de ce support de lecture nomade (3) l'affichage page par page, à la manière d'une impression réalisée par une imprimante, des dites pages au contenu. figé définissant l'information enregistrée ;
• l'on commande le défilement, page par page, en avant et/ou en arrière, de cette information.

3. Procédé selon la revendication 2, **caractérisé par le fait qu'**au cours de la seconde étape .
- on repère, d'une part, les lignes du texte initial et, d'autre part, pour chacune de ces dernières, les mots et groupes de mot sen effectuant des histogramme du texte initial
- on isole lesdits mots et groupes de mots au sein d'un rectangle graphique auquel on associe, d'une part, des coordonnées cartésiennes relatives à son emplacement dans le bloc correspondant au texte initial et, d'autre part, un numéro correspondant à l'ordre d'apparition du mot ou du groupe de mots dans ce texte
- l'on reconstitue, à partir des coordonnées cartésiennes, la structure du texte initial que l'on associe à des paramètres eux-mêmes associés aux blocs graphiques numérotés et ordonnés.

4. Procédé selon l'une quelconque des revendications 1 ou 3, **caractérisé par le fait que** la troisième étape consiste à assurer éventuellement, la réduction ou l'agrandissement des blocs graphiques ;
- une nouvelle mise en page de ces blocs graphiques, d'une part, en respectant la structure du texte initial et, d'autre part, en tenant compte des paramètres des pages destinées à être transférées audit support de lecture (3) ;
- l'insertion de ces blocs graphiques dans une succession des pages dont le contenu est, ensuite, figé ce qui confère à ces nouvelles pages une forme similaire à celle d'un fac-similé.

5. Procédé selon l'une quelconque des revendications précédentes, **caractérisé par le fait que** l'on assure, de manière successive, l'affichage des pages de l'information pour leur lecture à la manière d'un livre et que l'on commande, successivement et à l'aide de moyens appropriés (20, 36, 37, 38), le défilement de ces pages.

6. Dispositif (1) pour la consultation à partir d'un support de lecture nomade (3) comportant des moyens d'affichage (18) d'une information, correspondant à un texte au contenu figé issue d'une base de données informatique ou analogue et intégrant des moyens de transfert (8) de ladite information au support de lecture nomade (3), lesdits moyens de transfert (8) comportant des moyens (15) aptes à mettre ou à remettre ladite information sous la forme d'une succession de pages au contenu figé, de type fac-similé, ces nouvelles pages étant destinées à être transmises audit support de lecture (3), ce dernier comportant :
- des moyens de stockage (16) de l'information sous forme d'une succession de pages au. contenu figé, de type fac-similé ;
- des moyens de gestion (17) de l'affichage de l'information page par page et. à la manière d'une impression réalisée par une imprimante des dites pages au contenu figé définissant ladite information ;
- des moyens d'affichage (18) de ladite information sous forme d'au moins un écran de visualisation (19, 27, 34) de cette dernière ;
- des moyens de commande (20) du défilement, page par page, en avant et/ou en arrière, de l'information ;
- des moyens d'alimentation (21) autonomes des dits moyens de stockage (16), d'affichage (18), de gestion (17) de cet affichage et de commande. (20) de défilement ;
**caractérisé par** le fait
- qu'il intègre des moyens de découpage du texte en une succession de mots ou de groupes de mots et,
qu'il comporte des moyens pour l'enregistrement des coordonnées cartésiennes relatives à l'emplacement de mots et groupes de mots dans le bloc correspondant au texte initial et, d'autre part, un numéro correspondant à l'ordre d'apparition du mot ou du groupe de mots dans ce texte et pour la reconstitution, à partir des coordonnées cartésiennes, de la structure du texte initial que l'on associe à des paramètres eux-mêmes associés aux blocs graphiques numérotés et ordonnés.

7. Dispositif selon la revendication 6, **caractérisé par le fait que** les moyens de transfert (8) comportent :
- des moyens d'acquisition (11) de l'information sous forme de deux modems (12, 13) ou analogue reliés entre eux au travers d'un réseau de télécommunication (6) et implantés, 1 5 respectivement, au niveau d'une unité centrale (4) recevant ladite base de données (2) et d'une seconde machine (7)
- des moyens de transmission (14) de l'information entre la seconde machine (7) et le support de lecture (3), ces moyens (14) étant définis, au niveau de ce dernier, notamment par des moyens de réception (10).

8. Dispositif selon l'une quelconque des revendications 6 ou 7, **caractérisé par le fait que** les moyens d'affichage (18) sont définis par au moins un écran à cristaux liquides du type monochrome (27) et éclairé par l'arrière.

9. Dispositif selon la revendication 8, **caractérisé par le fait que** ledit écran (27) est transparent et reçoit, au moins au niveau de sa face arrière (28), des moyens (29), d'une part, aptes à occulter l'arrière plan dudit support de lecture (3) et, d'autre part, autorisant le passage de la clarté ambiante pour un éclairage, par l'arrière, de l'écran transparent (27).

10. Dispositif selon la revendication 9, **caractérisé par le fait que** ledit écran (27) est, d'une part, complété, en face avant (31) et en face arrière (28), par des moyens. d'occultation (29) et d'autre part, associé à des moyens aptes à réaliser un affichage, symétrique par rapport à un plan médian (P) de l'écran (27), de l'information en vue d'autoriser, pour deux pages successives (32, 33), une consultation, de manière intelligible, de l'information contenue dans la première (32) et dans la deuxième (33) de ces pages à partir, respectivement,. de l'avant et de l'arrière dudit écran transparent (27).

11. Dispositif selon l'une quelconque des revendications 9 ou 10, **caractérisé par le fait que** les moyens d'occultation (29) sont définis par une plaque de verre dépoli (30) ou analogue.

12. Dispositif selon l'une quelconque des revendications 6 ou 7, **caractérisé par le fait que** les moyens d'affichage (18) sont définis par au moins un écran transparent à cristaux liquides (34) du type cholestérique ou analogue et à l'arrière duquel est disposé un fond opaque (35), notamment noir.

13. Dispositif selon l'une quelconque des revendications 6 ou 7, **caractérisé par le fait que** les moyens d'affichage (18) sont définis par un écran transparent (34) à cristaux liquides de type cholestérique ou autre et complété, d'une part, par des moyens aptes à réaliser un affichage, symétrique par rapport à un plan médian (P) dudit écran (34), de l'information, et, d'autre part, par deux fonds opaques (35) de nature escamotable, notamment en alternance, et disposés, respectivement, à l'arrière (28) et à l'avant (31) dudit écran (34), en vue d'autoriser, pour deux pages successives (32, 33), une consultation, de manière intelligible, de 1finformation contenue dans la première (32) et dans la deuxième (33) de ces pages à partir, respectivement, de l'avant (31) et de l'arrière (28) dudit écran transparent (34).

14. Dispositif selon l'une quelconque des revendications 6 à 13, **caractérisé par le fait que** dans le cas de moyens d'affichage (18) au recto dudit support de lecture (3), lesdits moyens de commande (20) du défilement consistent, soit en au moins un capteur de basculement (36) et/ou au moins un capteur d'inclinaison (37) de ce. dernier (3), soit en au moins un organe de commande (38) apte à être actionné manuellement, notamment un bouton-poussoir (39), une molette (41) ou autre.

15. Dispositif selon l'une quelconque des revendications 6 à 13, **caractérisé par le fait que**, dans le cas d'un support de lecture (3) comportant des moyens d'affichage (18) du type recto verso de l'information, lesdits moyens de commande (20) en défilement, page par page, consistent en au moins un capteur de retournement (40) dudit support de lecture (3).

16. Dispositif selon la revendication 15, **caractérisé par le fait que** le ou les capteurs de retournement (40) sont complétés par des moyens d'inversion aptes à commander l'affichage de l'information, de manière intelligible, à l'envers sur ledit support de lecture (3).

17. Dispositif selon l'une quelconque des revendications 15 ou 16, **caractérisé par le fait que** le support de lecture (3) est complété par des moyens de commande en défilement rapide des pages consistant, soit en au moins un capteur d'inclinaison (37) et/ou en au moins un capteur de basculement (36), soit en au moins un organe de commande (38) apte à être actionné manuellement.

18. Dispositif selon l'une quelconque des revendications 6 à 17, **caractérisé par le fait que** ledit support de lecture (3) comporte un châssis (22) à l'intérieur duquel est enchâssé le ou les écrans (19, 27, 34) de visualisation et délimité, au moins partiellement, par un corps (24) destiné à recevoir lesdits moyens d'alimentation (21), de stockage (16), d'affichage (18), de gestion (17) de cet affichage et de commande (20) du défilement.

19. Dispositif selon les revendications 17 et 18, **caractérisé par le fait que** l'organe de commande (38) adopte la forme d'une molette (41) ou analogue disposée au niveau du châssis (22) perpendiculairement au plan (Pl) de ce dernier, ladite molette (41) émergeant, au moins en partie, au niveau du recto et/ou du verso dudit support de lecture (3), hors dudit châssis (22).

20. Dispositif selon l'une quelconque des revendications 6 à 19, **caractérisé par le fait que** ledit support de lecture (3) comporte des moyens d'affichage (42) du numéro de la page consultée, de tels moyens (42) consistant en au moins un afficheur (43) ou encore en une incrustation du numéro de la page, simultanément au contenu de cette dernière, au niveau du ou des écrans (19, 27, 34) de visualisation.

21. Dispositif selon l'une quelconque des revendications 6 à 19, **caractérisé par le fait qu'**il comporte des moyens aptes à détecter le basculement et/ou l'inclinaison du support de. lecture 3 au-delà d'un angle donné par rapport à son plan de référence, ces moyens de détection étant, dans le cas d'un tel basculement et/ou d'une telle inclinaison, à même, d'une part, de commander des moyens d'affichage, en même temps que l'information, du numéro de la page. correspondant à cette dernière et ceci, selon le cas à gauche ou à droite dudit support de lecture (3) et, d'autre part, à commander, selon l'emplacement du. numéro affiché, l'affichage. successif des pages de l'information dans un ordre décroissant ou croissant.

22. Dispositif selon l'une quelconque des. revendications 6 à 21, **caractérisé par le fait que** le support de lecture (3) comporte des moyens de mise en veille automatique des moyens d'affichage (18), notamment après une période prolongée d'immobilité.

23. Dispositif selon l'une quelconque des revendications 6 à 22 **caractérisé par le fait que** le support de lecture (3) comporte, d'une part, une mémoire non volatile et, d'autre part, des moyens aptes, après son extinction et/ou sa mise en veille, à sauvegarder dans ladite mémoire non volatile le numéro de la dernière page lue pour, lors d'une nouvelle consultation, afficher, automatiquement, la page correspondante au numéro enregistré dans cette mémoire non volatile.

24. Dispositif selon l'une quelconque des revendications 6 à 23, **caractérisé par le fait que** lesdits moyens de transfert (8) comportent des moyens aptes à créer des liens hypertexte entre, d'une part, l'une au moins des pages au contenu figé correspondant à l'information, dite primaire, et issue de la base de données (2) et, d'autre part, une information secondaire.

25. Dispositif selon la revendication 24, **caractérisé par le fait que** les moyens aptes à créer des liens hypertexte sont conçus aptes à commander, d'une part, des moyens (15) pour la mise de ladite information secondaire sous forme d'au moins une page au contenu figé et, d'autre part, le transfert de cette ou ces dernières audit support de lecture (3) de manière complémentaire, voire concomitante, au transfert des pages au contenu figé correspondant à l'information primaire.

26. Dispositif selon l'une quelconque des revendications 24 ou 25, **caractérisé par le fait que** ledit support de lecture (3) comporte des moyens aptes à activer lesdits liens hypertexte, ces moyens étant définis, par exemple, par au moins une zone définie au niveau d'au moins un écran tactile associé aux moyens d'affichage (18) ou, par exemple encore, en périphérie des moyens d'affichage (18) et pouvant adopter la forme d'au moins une bordure sensitive, d'au moins un capteur de pression ou autre.

## Patentansprüche

1. Verfahren zum Nachschlagen, durch automatisierte Softwaremittel eingesetzt, von einem transportierbaren Ablesemittel (3) aus, mit Anzeigemitteln (18) für eine unveränderlichem Text entsprechende Information, welche aus einer Computer- oder vergleichbaren Datenbasis (2) stammt, mit einem ersten Schritt, in welchem die Ränder gestrichen oder wenigstens verringert werden zur wesentlichen Bewahrung von einem oder mehreren Blocks, welche einem Text entsprechen, und einem zweiten Schritt, in welchem dieser Text in eine Reihe von Wörtern oder Wortgruppen zerlegt wird, **dadurch gekennzeichnet dass** es Folgendes umfasst :
- einen dritten Schritt, welcher darin besteht, die Wörter oder Wortgruppen innerhalb mindestens einer neuen Seite aufeinanderfolgend anzuordnen, wobei das Lay-out und die Struktur des ursprünglichen Textes beibehalten wird ;
- einen vierten Schritt, in welchem diese neue Seite oder neuen Seiten dem Ablesemittel (3) übermittelt werden.

2. Verfahren nach Anspruch 1, **dadurch gekennzeichnet, dass** das Lay-out oder neue Lay-out der Information darin besteht, dass :
- die besagte Information dem besagten Lesemittel (3) übermittelt wird und dass bei dieser Übermittlung die Setzung oder Neu-Setzung dieser Information in der Gestalt einer Reihe von Seiten mit unveränderlichem Text der Art Faksimile gewährleistet wird ;
- diese Information bei den Speicherungsmitteln (16), welche das besagte transportierbare Ablesemittel (3) umfasst, in der Gestalt einer Reihe von Seiten mit unveränderlichem Inhalt der Art Faksimile gespeichert wird und dass bei diesem transportierbaren Ablesemittel (3) die Anzeige seitenweise, wie bei einem von einem Drucker geleisteten Ausdruck der besagten Seiten mit dem unveränderlichen Inhalt, welche die gespeicherte Information bestimmen, gewährleistet wird ;
- das seitenweise Durchblättern nach vorn und/oder nach hinten dieser Information gesteuert wird.

3. Verfahren nach Anspruch 2, **dadurch gekennzeichnet, dass** im Laufe des zweiten Schrittes
- einerseits die Zeilen des ursprünglichen Textes und andererseits, für jede dieser Letzteren, die Wörter oder Wortgruppen geortet werden, indem Blockdiagramme des ursprünglichen Textes erstellt werden
- die besagten Wörter oder Wortgruppen innerhalb eines graphischen Rechtecks isoliert werden, welches einerseits kartesischen Koordinaten hinsichtlich seiner Stellung in dem dem ursprüngliche Text entsprechenden Block und andererseits einer der Reihenfolge der Erscheinung der Wörter oder Wortgruppen in diesem Text entsprechenden Zahl zugeordnet werden
- an Hand der kartesischen Koordinaten die Struktur des ursprünglichen Textes, welche Parametern zugeordnet wird, welche ihrerseits den nummerierten und geordneten graphischen Blöcken zugeordnet werden, wiederhergestellt wird.

4. Verfahren nach einem der Ansprüche 1 oder 3, **dadurch gekennzeichnet, dass** der dritte Schritt darin besteht, eventuell die Reduzierung oder Vergrößerung der graphischen Blöcke zu gewährleisten ;
- ein neues Lay-out dieser graphischen Blöcke zu gewährleisten, wobei einerseits die Struktur des ursprünglichen Textes beibehalten wird und andererseits die Parameter der zur Übermittlung zum besagten Ablesemittel (3) bestimmten Seiten in Betracht gezogen werden ;
- das Einfügen dieser graphischen Blöcke in einer Reihe von Seiten gewährleistet wird, deren Inhalt anschließend vorgegeben wird, wodurch diesen neuen Seiten eine Gestalt verliehen wird, welche der eines Faksimiles ähnelt.

5. Verfahren nach einem der vorangehenden Ansprüche, **dadurch gekennzeichnet, dass** die aufeinanderfolgende Anzeige der Seiten Information gewährleistet wird, so dass sie wie ein Buch gelesen werden können und dass mit Hilfe von angemessenen Mitteln (20, 36, 37, 38) das Durchblättern dieser Seiten gesteuert wird.

6. Vorrichtung zum Nachschlagen von einem transportierbaren Ablesemittel (3) aus, welches Anzeigemittel (18) für eine Information, welche einem Text mit unveränderlichem Inhalt aus einer Computer- oder vergleichbaren Datenbasis entspricht, welche Mittel zur Übermittlung (8) der besagten Information zum transportierbaren Ablesemittel (3) umschließt, wobei die besagten Übermittlungsmittel (8), Mittel (15) umfassen, welche geeignet sind, die besagte Information in die Gestalt einer Reihe von Seiten mit unveränderlichem Inhalt der Faksimile Art zu setzen oder wieder zu setzen, wobei diese neuen Seiten dazu bestimmt sind, dem Ablesemittel (3) übermittelt zu werden, wobei dieser Letztere Folgendes umfasst:
- Speicherungsmittel (16) für die Information in der Gestalt einer Reihe von Seiten mit unveränderlichem Inhalt der Faksimile Art ;
- Verwaltungsmittel (17) für die seitenweise Anzeige und wie ein von einem Drucker ausgeführter Ausdruck der besagten Seiten mit unveränderlichem Inhalt, welche die besagte Information bestimmen ;
- Anzeigemittel (18) für die besagte Information in der Gestalt von mindestens einem Bildschirm (19, 27, 34) zur Visualisierung der Letzteren ;
- Steuerungsmittel (20) für das seitenweise Durchblättern nach vorne und/oder nach hinten der Information ;
- autonome Versorgungsmittel (21) der besagten Speicherungsmittel (16), Anzeigemittel (18), Verwaltungsmittel (17) dieser Anzeige und der Steuerungsmittel (20) für das Durchblättern ;
**dadurch gekennzeichnet, dass** sie Mittel zur Zerlegung des Textes in eine Reihe von Wörtern oder Wortgruppen umschließt und dass sie Mittel zur Aufzeichnung der kartesischen Koordinate hinsichtlich der Stellung der Wörter oder Wortgruppen in dem dem ursprünglichen Text entsprechenden Block und andererseits eine Zahl, welche der Reihenfolge der Erscheinung der Wörter oder der Wortgruppen in diesem Text entspricht, um an Hand der kartesischen Koordinaten die Struktur des ursprünglichen Textes, welche Parametern zugeordnet wird, welche ihrerseits den nummerierten und geordneten graphischen Blöcken zugeordnet sind, wiederherzustellen.

7. Vorrichtung nach Anspruch 6, **dadurch gekennzeichnet, dass** die Übermittlungsmittel (8) Folgendes umfassen :
- Informationsakquisitionsmittel (11) in der Gestalt von zwei Modems (12, 13) oder vergleichbarem, die miteinander durch ein Telekommunikationsnetzwerk (6) verbunden sind und jeweils (1, 5) bei einer Zentraleinheit (4) implantiert sind, welche die besagte Datenbasis (2) empfängt und einer zweiten Maschine (7)
- Mittel zur Übermittlung (14) der Information zwischen der zweiten Maschine (7) und der Ablesemittel (3), wobei diese Mittel (14) bei diesen Letztern besonders durch Empfangsmittel (10), bestimmt sind.

8. Vorrichtung nach einem der Ansprüche 6 oder 7, **dadurch gekennzeichnet, dass** die Anzeigemittel (18) durch mindestens einen monochromen und von hinten beleuchteten Flüssigkristallbildschirm (27) bestimmt sind.

9. Vorrichtung nach Anspruch 8, **dadurch gekennzeichnet, dass** der besagte Bildschirm (27) transparent ist und mindestens auf seiner Rückseite (28) Mittel (29) empfängt, welche einerseits geeignet sind, den Hintergrund des besagten Ablesemittels (3) zur verdecken und andererseits das Durchlassen der herrschenden Helligkeit zu erlauben, um den transparenten Bildschirm (27) von hinten zu beleuchten.

10. Vorrichtung nach Anspruch 9, **dadurch gekennzeichnet, dass** der besagte Bildschirm (27) einerseits auf der Vorderseite (31) und auf der Rückseite (28) durch Verdeckungsmittel (29) ergänzt wird und andererseits zur Herstellung einer Anzeige der Information geeigneten Mitteln zugeordnet ist, welche hinsichtlich einer Mittelebene (P) des Bildschirms (27) symmetrisch ist, um für zwei aufeinanderfolgende Seiten (32, 33) eine verständliche Ablesung der Information, welche in der ersten (32) und der zweiten (33) dieser Seiten enthalten ist, von der Vorderseite bzw. der Rückseite des besagten transparenten Bildschirms (27) zu ermöglichen.

11. Vorrichtung nach einem der Ansprüche 9 oder 10, **dadurch gekennzeichnet, dass** die Verdeckungsmittel (29) durch eine matte Glasplatte (30) oder ähnliches bestimmt sind.

12. Vorrichtung nach einem der Ansprüche 6 oder 7, **dadurch gekennzeichnet, dass** die Anzeigemittel (18) durch mindestens einen transparenten Flüssigkristallbildschirm (34) der cholesterinischen oder einer ähnlichen Art bestimmt sind und hinter welchem ein undurchsichtiger Grund (35), besonders ein schwarzer Grund, angeordnet ist.

13. Vorrichtung nach einem der Ansprüche 6 oder 7, **dadurch gekennzeichnet, dass** die Anzeigemittel (18) durch einen transparenten Bildschirm (34) mit Flüssigkristallen der cholesterinischen oder einer ähnlichen Art bestimmt sind und einerseits durch Mittel zur Herstellung einer Anzeige der Information geeigneten Mittel ergänzt sind, welche hinsichtlich einer Mittelebene (P) des besagten Bildschirms (34) symmetrisch ist, und andererseits durch zwei undurchsichtige Gründe (35), welche ausziehbar sind, besonders abwechselnd, und welche auf der Hinterseite (28) bzw. der Vorderseite (31) des besagten Bildschirms (34) angeordnet sind, um für zwei aufeinanderfolgende Seiten (32, 33) eine verständliche Ablesung der in der ersten Seite (32) und in der zweiten Seite (33) enthaltenen Information auf der Vorderseite (31) bzw. Rückseite (28) des besagten transparenten Bildschirms (34) zu ermöglichen.

14. Vorrichtung nach einem der Ansprüche 6 bis 13, **dadurch gekennzeichnet, dass** im Falle der Anzeigemittel (18) auf der Rückseite des Ablesemittels (3), die besagten Steuerungsmittel (20) für das Durchblättern aus entweder einem Umschwenksensor (36) und/oder mindestens einem Schrägstellungssensor (37) für das Letztere (3) oder aus mindestens einem Steuerungsorgan (38), welches manuell betätigt werden kann, besonders einem Druckknopf (39), Roulett (41) oder ähnlichem bestehen.

15. Vorrichtung nach einem der Ansprüche 6 bis 13, **dadurch gekennzeichnet, dass** im Falle eines Ablesemittels (3) mit Mitteln für vorderseitige und rückseitige Anzeige (18) der Information, die besagten Steuerungsmittel (20) zum seitenweisen Durchblättern mindestens einen Umdrehsensor (40) für das besagte Ablesemittel (3) umfassen.

16. Vorrichtung nach Anspruch 15, **dadurch gekennzeichnet, dass** der oder die Umdrehsensoren (40) durch Inversionsmittel ergänzt werden, welche die Anzeige der Information auf verständliche Weise auf die Rückseite des besagten Ablesemittels (3) steuern können.

17. Vorrichtung nach einem der Ansprüche 15 oder 16, **dadurch gekennzeichnet, dass** das Ablesemittel (3) durch Steuerungsmittel zum raschen Durchblättern der Seiten ergänzt wird, welche aus mindestens einem Schrägstellungssensor (37) und/oder mindestens einem Schwenksensor (36) oder aus mindestens einem Steuerungsorgan (38), welches manuell betätigt werden kann, bestehen.

18. Vorrichtung nach einem der Ansprüche 6 bis 17, **dadurch gekennzeichnet, dass** das besagte Ablesemittel (3) einen Rahmen (22) umfasst, in welchem der oder die Visualisierungsbildschirme (19, 27, 34) eingefasst sind, und welcher mindestens teilweise durch ein Element (24) abgegrenzt sind, welches die besagten Versorgungsmittel (21), Speicherungsmittel (16), Anzeigemittel (18), Verwaltungsmittel (17) für diese Anzeige und Steuerungsmittel (20) für das Durchblättern aufnehmen soll.

19. Vorrichtung nach einem der Ansprüche 17 und 18, **dadurch gekennzeichnet, dass** das Steuerungsorgan (38) die Gestalt eines Rouletts (41) oder ähnlichem annimmt, welches am Rahmen (22) lotrecht zur Ebene (P1) dieses Letzteren angeordnet ist, wobei das besagte Roulett (41) wenigstens teilweise auf der Vorder- und/oder Rückseite des besagten Ablesemittels (3) aus dem Rahmen (22) hervorragt.

20. Vorrichtung nach einem der Ansprüche 6 bis 19, **dadurch gekennzeichnet, dass** das besagte Ablesemittel (3) Mittel (42) zur Anzeige der abgelesenen Seitenzahl umfasst, wobei solche Mittel (42) aus mindestens einem Anzeiger (43) oder gar einer Einblendung der Seitenzahl besteht, gleichzeitig mit dem Inhalt der Letzteren, an dem oder den Visualisierungsbildschirmen (19, 27, 34).

21. Vorrichtung nach einem der Ansprüche 6 bis 19, **dadurch gekennzeichnet, dass** sie Mittel zur Feststellung des Schwenkens und/oder der Schrägstellung des Ablesemittels (3) über einen gegebenen Winkel zur Referenzebene hinaus umfasst, wobei diese Feststellungsmittel in der Lage sind, im Falle eines solchen Schwenkens und/oder einer solcher Schrägstellung, einerseits die Anzeigemittel zu steuern, sowie gleichzeitig die Information zur Seitenzahl, welche der Seite zugeordnet ist, je nachdem, entweder auf der linken oder der rechten Seite des besagten Ablesemittels (3) und andererseits, die aufeinanderfolgende Anzeige der Informationsseiten in einer zunehmenden oder abnehmenden Reihenfolge.

22. Vorrichtung nach einem der Ansprüche 6 bis 21, **dadurch gekennzeichnet, dass** das Ablesemittel (3) Mittel zur automatischen Herunterschaltung der Anzeigemittel (18) umfasst, besonders nach einer längeren Zeitspanne ohne Bewegung.

23. Vorrichtung nach einem der Ansprüche 6 bis 22, **dadurch gekennzeichnet, dass** das Ablesemittel (3) einerseits einen nicht-flüchtigen Speicher umfasst und andererseits Mittel, die dazu geeignet sind, nach dem Ausschalten oder Herunterschalten, in dem besagten nicht-flüchtigen Speicher, die Seitenzahl der zuletzt gelesenen Seite zu sichern, um bei einer erneuten Ablesung automatisch die der in diesem nicht-flüchtigen Speicher gespeicherten Zahl entsprechende Seite anzuzeigen.

24. Vorrichtung nach einem der Ansprüche 6 bis 23, **dadurch gekennzeichnet, dass** die besagten Mittel zur Übermittlung (8) Mittel umfassen, welche Hypertextlinke bilden können zwischen einerseits mindestens einer der Seiten mit unveränderlichem Text, welche der sogenannten Hauptinformation entsprechen und welche aus der Datenbasis (2) stammen und andererseits einer Nebeninformation.

25. Vorrichtung nach Anspruch 24, **dadurch gekennzeichnet, dass** die Mittel zur Bildung der Hypertextlinke so gestaltet sind, dass sie einerseits Mittel (15) zum Setzen der besagten Nebeninformation in der Gestalt von mindestens einer Seite mit unveränderlichem Inhalt steuern können und andererseits die Übermittlung dieser letzteren Seite oder Seiten an das besagte Ablesemittel (3) ergänzenderweise oder gar gleichzeitig zur Übermittlung der Seiten mit unveränderlichem Inhalt, welcher der Hauptinformation entspricht, steuern können.

26. Vorrichtung nach einem der Ansprüche 24 oder 25, **dadurch gekennzeichnet, dass** das besagte Ablesemittel (3) geeignete Mittel zur Aktivierung der besagten Hypertextlinke umfasst, wobei diese Mittel beispielsweise durch mindestens einen auf mindestens einem taktilen Bildschirm bestimmten Bereich, welcher mit den Anzeigemitteln (18) verbunden ist, bestimmt sind, oder ferner beispielsweise am Rand der Anzeigemittel (18) bestimmt sind und die Gestalt mindestens eines empfindlichen Randes, mindestens eines Drucksensors oder ähnlichem annehmen können.

## Claims

1. Method used by automated software means for viewing information corresponding to a text with fixed contents derived from a computer or a similar database (2), on a mobile read support (3) provided with display means (18), comprising a first step to delete or at least reduce margins in order to keep essentially one or several blocks corresponding to text and a second step to cut out this text into a series of words or groups of words, **characterised by** the fact that it comprises:
- a third step consisting of arranging these words or groups of words one following the other, respecting the page layout and the structure of the initial text, within at least one new page;
- a fourth step to transfer this or these new pages to the read support (3).

2. Process according to claim 1, **characterised by** the fact that the page layout or the revision to the page layout for the information consists of the following steps:
. the said information is transferred to the said mobile read device (3) and when the transfer is made, this information is formatted or reformatted as a series of pages with fixed contents, like a fax;
. this information is recorded on the storage means (16) contained in the said mobile read support (3), in the form of a series of pages with fixed contents, like a fax, and is displayed page by page on this mobile read support device (3), in the same way as a printout is made on a printer, the said pages with fixed contents defining the recorded information;
. this information is scrolled forwards and / or backwards, page by page.

3. Process according to claim 2, **characterised by** the fact that the second step includes the following sub-steps:
- histograms of the initial text are made to mark firstly the initial text lines, and secondly the words and word groups for each of the initial text lines,
- the said words and groups of words are isolated within a graphic rectangle, and the graphic rectangle is associated firstly with Cartesian coordinates related to its location in the block corresponding to the initial text, together with a number corresponding to the order in which the words or group of words appears in this text,
- the structure of the initial text is reconstituted from the Cartesian coordinates, and is associated with parameters that are themselves associated with numbered and ordered graphic blocks.

4. Process according to any one of claims 1 to 3, **characterised by** the fact that the third step consists of reducing or increasing the size of the graphic blocks;
- a new page layout of these graphic blocks, firstly respecting the structure of the initial text, and secondly taking into account of the parameters of the pages to be transferred to the said read support (3);
- these graphic boxes are inserted in a series of pages, the contents of which are then fixed, which applies a format to these new pages similar to the format of a fax.

5. Process according to any one of the previous claims, **characterised by** the fact that the information pages are displayed in turn so that they can be read like a book, and that these pages are scrolled forwards or backwards successively using appropriate means (20, 36, 37, 38).

6. Device (1) for viewing information corresponding to text with fixed contents derived from a computer or a similar database on a mobile read support (3) provided with display means (18), including means of transferring (8) the said information to the mobile read support (3), the said transfer means (8) comprising means (15) of formatting or reformatting the said information in the form of a series of pages with fixed contents of the fax type, these new pages being intended to be transmitted to the said read support (3), which comprises:
- means (16) of storage of the information in the form of a series of pages with fixed contents, like a fax;
- means (17) of managing the page by page display of the information, like using a printer to printout the said pages with fixed contents defining the said information;
- means (18) of displaying the said information in the form of at least one information display screen (19, 27, 34);
- means (20) of controlling forwards or backwards scrolling of the information, page by page;
- independent power supply means (21) for the said storage means (16), display means (18), management means (17) for this display and forwards or backwards scroll control means (20);
**characterised by** the fact that it includes means of cutting out the text into a series of words or groups of words, and it comprises means of recording Cartesian coordinates related to the location of words and groups of words in the block corresponding to the initial text, and secondly a number corresponding to the order in which the words or group of words appears in the text and for recomposition, from the Cartesian coordinates, of the structure of the initial text associated with parameters, themselves associated with numbered and ordered graphic blocks.

7. Device according to claim 6, **characterised by** the fact that the transfer means (8) comprise:
- means of acquisition (11) of the information in the form of two modems (12, 13) or similar devices connected to each other through a telecommunications network (6) and installed, 1, 5 respectively, in a system unit (4) into which the said database (2) is installed, and a second machine (7),
- means (14) of transmitting information between the second machine (7) and the read support (3), these means (14) being defined on the read support, particularly by the reception means (10).

8. Device according to either of claims 6 and 7, **characterised by** the fact that the display means (18) are defined by at least one monochrome type of backlit liquid crystal screen (27).

9. Device according to claim 8, **characterised by** the fact that the said screen (27) is transparent, and its back face (28) is fitted with means (29) firstly to conceal the back plane of the said read support (3), and secondly to enable passage of ambient light for backlighting of the transparent screen (27).

10. Device according to claim 9, **characterised by** the fact that the said screen (27) is used together with firstly closing off means (29) on the front face (31) and the back face (28), and secondly associated with means capable of making a display symmetric about a median plane (P) of the screen (27), to enable intelligible viewing of the information contained in the first part (32) and in the second part (33) of these pages using the front and the back of the said transparent screen (27).

11. Device according to either of claims 9 and 10, **characterized by** the fact that the closing means (29) are defined by a frosted glass (30) or similar plate.

12. Device according to either of claims 6 and 7, **characterised by** the fact that the display means (18) are defined by at least one transparent liquid crystal screen (34) of the cholesteric or similar type, at the back of which there is an opaque background (35), and particularly a black background.

13. Device according to either of claims 6 and 7, **characterised by** the fact that the display means (18) are defined by a transparent liquid crystal screen (34) of the cholesteric or other type, and are used with firstly means capable of making a display of the information symmetric about a median plane (P) of the said screen (34), and secondly by two retractable type opaque backgrounds (35), particularly alternating and arranged at the back (28) and the front (31) of the said screen (34) respectively to enable intelligible viewing of the information contained in the first part (32) and in the second part (33) of these pages using the front (31) and the back (28) of the said transparent screen (34).

14. Device according to any one of claims 6 to 13, **characterised by** the fact that in the case of display means (18) on the front of the said read support (3), the said scrolling control means (20) consist of either at least one turnover sensor (36) and / or at least one inclination sensor (37) measuring the inclination of the read support (3), or at least one control device (38) that can be activated manually, and particularly a push button (39), a hand wheel (41) or other.

15. Device according to any one of claims 6 to 13, **characterised by** the fact that in the case of a read support (3) comprising front - back type information display means (18), the said page by page scroll control means (20) consist of at least one sensor (40) detecting when the said read support (3) is turned over.

16. Device according to claim 15, **characterised by** the fact that the turnover sensor(s) (40) are used with inversion means capable of controlling intelligible display of the information on the back of the said read support (3).

17. Device according to either of claims 15 and 16, **characterised by** the fact that the read support (3) is used with control means for quickly scrolling through the pages consisting of at least one inclination sensor (37) and / or at least one turnover sensor (36), or at least one control device (38) that can be activated manually.

18. Device according to any one of claims 6 to 17, **characterised by** the fact that the said read support (3) comprises a frame (22) inside which the display screen(s) (19, 27, 34) are inserted and at least partially delimited by a body (24) in which the said supply means (21), storage means (16), display means (18) and management means (17) for this display and scrolling control means (20) are placed.

19. Device according to claims 17 and 18, **characterised by** the fact that the control device (38) adopts the shape of a wheel (41) or a similar shape arranged at the frame (22) perpendicular to the plane (P1) of the frame, the said wheel (41) at least partly emerging at the front and / or back of the said read support (3) outside the said frame (22).

20. Device according to any one of claims 6 to 19, **characterised by** the fact that the said read support (3) comprises display means (42) for displaying the viewed page number, these means (42) consisting of at least one display (43) or a means of insetting the page number, at the same time as the contents of the page are displayed, on the display screen(s) (19, 27, 34).

21. Device according to any one of claims 6 to 19, **characterised by** the fact that it comprises means capable of detecting turning over and / or inclination of the read support (3) beyond a given angle with respect to its reference plane, when the read support is turned over and / or inclined in this way, these detection means being capable firstly of controlling display means of the page number corresponding to the information at the same time as the information itself, and either at the left or right of the said read support (3) depending on the case, and secondly of controlling the successive display of information pages in an increasing or decreasing order, depending on the position of the displayed number.

22. Device according to any one of claims 6 to 21, **characterised by** the fact that the read support (3) comprises automatic standby means for the display means (18), particularly after a prolonged period of immobility.

23. Device according to any one of claims 6 to 22, **characterised by** the fact that the read support (3) comprises firstly a non-volatile memory, and secondly means for saving the number of the last page read in a non volatile memory when the screen is switched off and / or put on standby, so that the next time that the screen is switched on, it can automatically display the page corresponding to the page number saved in this non volatile memory.

24. Device according to any one of claims 6 to 23, **characterised by** the fact that the said transfer means (8) comprise means of creating hypertext links firstly between at least one of the pages with fixed contents corresponding to the information, called the primary information output from the database (2), and secondly information called secondary information.

25. Device according to claim 24, **characterised by** the fact that the means capable of creating hypertext links are designed to be able to control firstly means (15) for formatting the said secondary information in the form of at least one page with fixed contents, and secondly transferring this information to the said read support (3) in a complementary manner, or even concomitant with transfer of the pages with fixed contents corresponding to the primary information.

26. Device according to either of claims 24 and 25, **characterised by** the fact that the said read support (3) comprises means capable of activating the said hypertext links, these means being defined, for example, by at least one zone defined on at least one touch screen associated with the display means (18), or for example at the periphery of the display means (18) and that can be in the form of at least one sensitive border, and at least one pressure sensor, or other.
